# EUROPEAN PATENT SPECIFICATION

(11) **EP 1 980 425 B1**
(45) Date of publication and mention of the grant of the patent: **26.05.2010**
(21) Application number: 08075229.8
(22) Date of filing: 31.03.2008
(51) Int. Cl.: B60G 9/00, B60G 11/46, F16F 1/18, B21D 53/88, B21H 7/00, F16F 1/368

(54) **Width-varying suspension arm**
Aufhängungsarm mit verstellbarer Breite
Bras de suspension à variation de largeur

(30) Priority: 13.04.2007 NL 1033685
(43) Date of publication of application: 15.10.2008
(73) Proprietor: Weweler Nederland B.V., 7332 AP Apeldoorn (NL)
(72) Inventor: Aalderink, Derk Geert, 7245 NV Laren (NL)
(74) Representative: Houben, Christiaan Hein Willem Frans

(56) References cited:
- EP-A- 0 253 574
- EP-A- 1 138 432
- JP-A- 7 185 604
- JP-A- 56 036 308
- JP-A- 59 107 705
- JP-A- 2002 059 211

## Description

The invention relates to a resilient suspension arm for a wheel axle suspension of a vehicle, comprising a portion which, viewed in the normal direction of travel of the vehicle, is at the front and has a front end, at which an eye is formed in order to attach the suspension arm to the vehicle in a pivoting manner, a clamping portion which, viewed in the direction of travel, is behind the front portion, where the wheel axle is clamped against the suspension arm in the fitted state, as well as an intermediate portion which connects the front portion and the clamping portion.

A suspension arm of this type is known from EP 1 138 432. The known suspension arm has a front portion, the width and thickness of which decrease in the direction of travel.

It is an object of the invention to provide an alternative suspension arm.

This object is achieved according to the invention by a resilient suspension arm in accordance with the preamble of claim 1, characterized by the fact that the suspension arm has a substantially constant thickness and constant width at the location of the clamping portion, that the front portion has a substantially constant width which is smaller than the width of the clamping portion, as well as a thickness which decreases starting from the intermediate portion, and that the intermediate portion has a substantially constant thickness and a width which decreases starting from the clamping portion in such a manner that one end of the intermediate portion, viewed in the width direction, joins the clamping portion and the other end joins the front portion in the width direction.

At the location where the axle is clamped, the suspension arm is wide in order to produce a stable connection with the wheel axle, in particular with respect to transverse forces. The front portion is designed to be narrower, as a result of which a favourable ratio is achieved between the weight of the suspension arm and the axle load to be supported.

The invention will be explained in more detail with reference to the drawing, in which:
Fig. 1 shows a perspective view of the suspension arm according to the invention,
Fig. 2 shows a top view of the suspension arm from Fig. 1, and
Fig. 3 shows a side view of a portion of a wheel axle suspension with the suspension arm from Figs. 1 and 2.

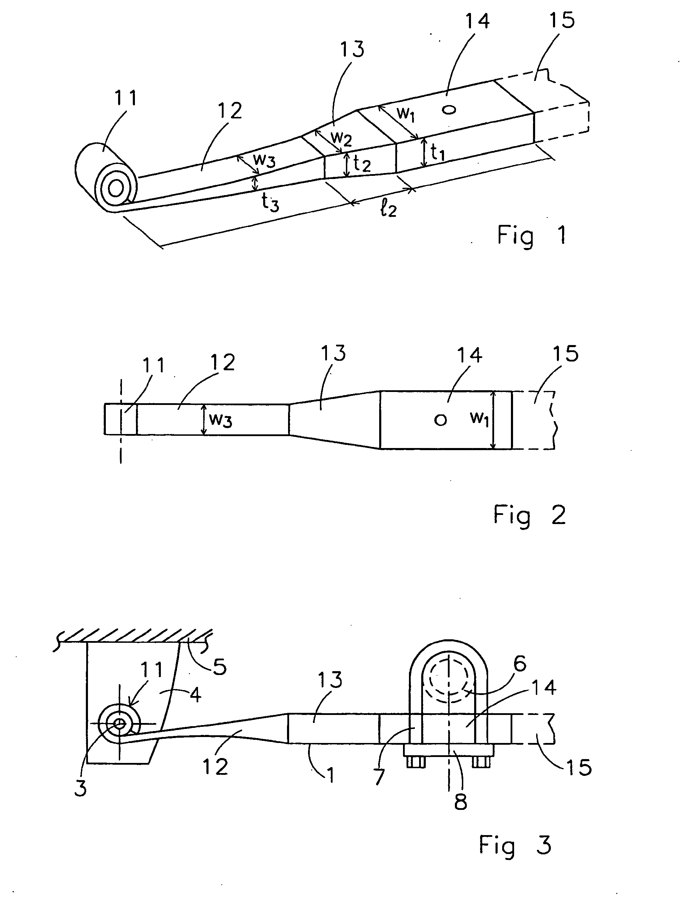

Fig. 3 shows part of a wheel axle suspension of a vehicle, for example a trailer or a lorry. The wheel axle suspension comprises a longitudinal suspension arm 1 which, at an end which is at the front, viewed in the direction of travel, is provided with an eye 11 by means of which the suspension arm 1 is attached in a pivoting manner to a bearing bracket 4, also referred to as a spring carrier arm 4, via a pivot bolt 3. The top of the spring carrier arm 4 is attached to a chassis beam 5, for example by welding or a bolted connection.

The suspension arm 1 is formed from steel by rolling and is resilient. The suspension arm 1 comprises a front portion 12, a clamping portion 14 and an intermediate portion 13 which, viewed in the length direction, is situated between the front portion and clamping portion, as can be seen in Figs. 1-3. The securing eye 11 is formed at the front end of the front portion 12.

A wheel axle 6 is clamped onto the clamping portion 14 of the suspension arm 1 by means of clamping straps 7 and a strap plate 8, as can be seen in Fig. 3. Further towards the back, the suspension arm 1 may also have a further portion 15 which is partially shown by a dashed line and where a pneumatic spring (bellows) can be fitted by means of which the suspension arm 1 supports a chassis part situated above it.

At the location of the clamping portion 14, the suspension arm 1 has a substantially constant thickness t₁ and constant width w₁. Preferably, the thickness t₁ is approximately half the width w₁. The width w₁ approximately corresponds to the width of the blank from which the suspension arm is rolled. In practice, this width is usually approximately 100 mm. In practice, the thickness t₁ is approximately 50 mm.

The front portion 12 of the suspension arm 1 has a substantially constant width w₃ which is smaller than the width w₁ of the clamping portion 14. Preferably, the width w₃ of the front part 12 is between 60% and 80% of the width w₁ of the clamping portion 14, in practice, for example 75 mm. The front portion 12 has a thickness t₃ which decreases starting from the intermediate portion 13 in the direction of the securing eye 11.

The intermediate portion 13 has a substantially constant thickness t₂, which corresponds to the thickness t₁. At the transition to the clamping portion 14, the intermediate portion 13 has a width w₂ which corresponds to the width w₁ of the clamping portion 14. The width w₂ of the intermediate portion 13 at the transition to the front portion 12 corresponds to the width w₃ of the front portion 12. Between these two extreme values, the width w₂ of the intermediate portion 13 decreases in a linear manner. In order to ensure that the material stress at the location of this reduction in width is kept the same, the intermediate portion 13 has a certain ratio between width reduction and length (w₁-w₃)/I₂, which is preferably between 0.25 and 0.30. The length I₂ of the intermediate portion 13 is in practice, for example, approximately 90 mm.

In the length direction, the thickness profile of the front portion 12 is preferably formed such that the material stress is kept the same in the entire front portion 12. Preferably, the shape of the thickness profile is parabolic, that is to say the thickness t₃ is a parabolic function of the distance to the transition at the intermediate portion in order to achieve a uniform distribution of stresses.

The thickness of the material which is shaped to form a securing eye 11 is substantially constant.

As a result of the specific shape of the suspension arm 1 according to the invention as described above, the rolling treatment of the suspension arm 1 is kept simple and a suspension arm 1 which can be produced in a relatively simple and inexpensive manner is obtained which is nevertheless wide at the axle clamp and narrower at a front portion. As a result, this suspension arm 1 makes it possible to produce a stable connection to the wheel axle at the clamping portion 14, in particular with regard to transverse forces which cannot be absorbed by the bellows, while the front portion provides a favourable ratio between weight of the suspension arm and the axle load to be supported.

## Claims

1. Resilient suspension arm for a wheel axle suspension of a vehicle, comprising a portion which, viewed in the normal direction of travel of the vehicle, is at the front and has a front end at which an eye is formed in order to attach the suspension arm to the vehicle in a pivoting manner, a clamping portion which, viewed in the direction of travel, is behind the front portion, where the wheel axle is clamped against the suspension arm in the fitted state, as well as an intermediate portion which connects the front portion and the clamping portion, **characterized in that** the suspension arm has a substantially constant thickness and constant width at the location of the clamping portion, **in that** the front portion has a substantially constant width which is smaller than the width of the clamping portion, as well as a thickness which decreases starting from the intermediate portion in the direction of the eye, and **in that** the intermediate portion has a substantially constant thickness and a width which decreases starting from the clamping portion in such a manner that one end of the intermediate portion, viewed in the width direction, joins the clamping portion and the other end joins the front portion in the width direction.

2. Resilient suspension arm according to claim 1, in which the shape of the thickness profile of the front portion is parabolic, viewed in the length direction.

3. Resilient suspension arm according to claim 1 or 2, in which the width of the intermediate portion decreases in a linear manner.

4. Resilient suspension arm according to one of the preceding claims, in which the width of the front part is between 60%-80% of the clamping portion.

5. Resilient suspension arm according to one of the preceding claims, in which the thickness of the suspension arm at the location of the clamping portion is approximately half the width.

6. Wheel axle suspension provided with a suspension arm according to one of the preceding claims.

7. Vehicle provided with a wheel axle suspension according to claim 6.

## Patentansprüche

1. Federnder Aufhängungsarm für eine Radachsenaufhängung eines Fahrzeugs, enthaltend einen Abschnitt, der sich, in der normalen Bewegungsrichtung des Fahrzeugs betrachtet, an der Vorderseite befindet und ein vorderes Ende aufweist, an dem ein Lagerauge ausgebildet ist, um den Aufhängungsarm an dem Fahrzeug schwenkbar anzubringen, einen Klemmabschnitt, der sich, in der Bewegungsrichtung betrachtet, hinter dem vorderen Abschnitt befindet und an dem die Radachse an den Aufhängungsarm im angebrachten Zustand geklemmt ist, wie auch einen Zwischenabschnitt, der den vorderen Abschnitt und den Klemmabschnitt verbindet, **dadurch gekennzeichnet, dass** der Aufhängungsarm eine im wesentlichen gleichbleibende Dicke und eine im wesentlichen gleichbleibende Breite an der Stelle des Klemmabschnittes hat, der vordere Abschnitt eine im wesentlichen gleichbleibende Breite, die geringer ist als die Breite des Klemmabschnittes, wie auch eine Dicke aufweist, die beginnend von dem Zwischenabschnitt in Richtung des Lagerauges abnimmt, und der Zwischenabschnitt eine im wesentlichen konstante Dicke und eine Breite hat, die ausgehend von dem Klemmabschnitt derart abnimmt, dass eine Ende des Zwischenabschnittes, in Breitenrichtung gesehen, in den Klemmabschnitt ausläuft und das andere Ende in der Breitenrichtung in das vordere Ende ausläuft.

2. Federnder Aufhängungsarm nach Anspruch 1, bei dem die Form des Dickenprofils des vorderen Abschnittes in Längsrichtung betrachtet parabelartig ist.

3. Federnder Aufhängungsarm nach Anspruch 1 oder 2, bei dem die Breite des Zwischenabschnittes linear abnimmt.

4. Federnder Aufhängungsarm nach einem der vorhergehenden Ansprüche, bei dem die Breite des vorderen Abschnittes zwischen 60% und 80% des Klemmabschnittes beträgt.

5. Federnder Aufhängungsarm nach einem der vorhergehenden Ansprüche, bei dem die Dicke des Aufhängungsarmes an der Stelle des Klemmabschnittes etwa die Hälfte der Breite ist.

6. Radachsenaufhängung, die mit einem Aufhängungsarm gemäß einem der vorhergehenden Ansprüche versehen ist.

7. Fahrzeug, das mit einer Radachsenaufhängung nach Anspruch 6 versehen ist.

## Revendications

1. Bras de suspension élastique pour une suspension d'essieu de roue d'un véhicule, comprenant une partie qui, lorsque vue dans le sens normal de déplacement du véhicule, est à l'avant et comporte une extrémité avant au niveau de laquelle un oeilleton est formé pour attacher le bras de suspension au véhicule d'une manière pivotante, une partie de serrage qui, lorsque vue dans le sens de déplacement, est derrière la partie avant, où l'essieu de roue est serré contre le bras de suspension dans l'état ajusté, ainsi qu'une partie intermédiaire qui relie la partie avant et la partie de serrage, **caractérisé en ce que** le bras de suspension présente une épaisseur sensiblement constante et une largeur sensiblement constante au niveau de l'emplacement de la partie de serrage, **en ce que** la partie avant présente une largeur sensiblement constante qui est plus petite que la largeur de la partie de serrage, ainsi qu'une épaisseur qui diminue à partir de la partie intermédiaire dans la direction de l'oeilleton, et **en ce que** la partie intermédiaire présente une épaisseur sensiblement constante et une largeur qui diminue à partir de la partie de serrage de sorte qu'une extrémité de la partie intermédiaire, lorsque vue dans le sens de la largeur, rejoint la partie de serrage et l'autre extrémité rejoint la partie avant dans le sens de la largeur.

2. Bras de suspension élastique selon la revendication 1, dans lequel la forme du profil d'épaisseur de la partie avant est parabolique, lorsque vue dans le sens de la longueur.

3. Bras de suspension élastique selon la revendication 1 ou 2, dans lequel la largeur de la partie intermédiaire diminue d'une façon linéaire.

4. Bras de suspension élastique selon l'une des revendications précédentes, dans lequel la largeur de la partie avant fait entre 60 % et 80 % de la partie de serrage.

5. Bras de suspension élastique selon l'une des revendications précédentes, dans lequel l'épaisseur du bras de suspension au niveau de l'emplacement de la partie de serrage fait approximativement la moitié de la largeur.

6. Suspension d'essieu de roue munie d'un bras de suspension selon l'une des revendications précédentes.

7. Véhicule muni d'une suspension d'essieu de roue selon la revendication 6.
